# EUROPEAN PATENT APPLICATION

(11) **EP 4 567 593 A1**
(43) Date of publication of application: **11.06.2025**
(21) Application number: 23854516.4
(22) Date of filing: 18.08.2023
(51) Int. Cl.: G06F 9/455

(54) **CLOUD COMPUTING TECHNOLOGY-BASED VIRTUAL INSTANCE CREATION METHOD AND CLOUD MANAGEMENT PLATFORM**

(30) Priority: 18.08.2022 CN 202210991442; 10.04.2023 CN 202310376231
(71) Applicant: Huawei Cloud Computing Technologies Co., Ltd., Guiyang, Guizhou 550025 (CN)
(72) Inventor: GAO, Zhonghua, Shenzhen, Guangdong 518129 (CN); WANG, Rui, Shenzhen, Guangdong 518129 (CN); ZHANG, Yongming, Shenzhen, Guangdong 518129 (CN)
(74) Representative: Maiwald GmbH
(86) International application number: PCT/CN2023/113710
(87) International publication number: WO 2024/037619

(57) **Abstract**

The present invention discloses a virtual instance creation method based on a cloud computing technology and a cloud management platform. The method includes: A cloud management platform obtains a virtual instance creation request input by a tenant, where the creation request includes specification information of a to-be-created virtual instance, site information, and information about a cloud native application to which the to-be-created virtual instance belongs. Based on the obtained information, the cloud management platform selects to create the virtual instance on a computing node whose specification matches the specification information, where the computing node is set in a cloud data center matching the site information, and the virtual instance is configured to run one or more microservices in the cloud native application. Based on this, the cloud management platform configures, based on the obtained information about the cloud native application, a virtual instance manager in the computing node to mark, with an identifier of the cloud native application, a service packet sent by the virtual instance, to implement identification and recognition of the service packet of the virtual instance, thereby simplifying an access permission configuration operation and improving security policy configuration efficiency.

## Description

### TECHNICAL FIELD

This application relates to the field of cloud computing technologies, and in particular, to a virtual instance creation method based on a cloud computing technology and a cloud management platform that runs the method.

### BACKGROUND

With maturity of public cloud technologies, cloud native applications have developed greatly, and more services focus on application development. However, a current cloud network architecture model makes cloud native applications complex in operation processes such as deployment, migration, interworking, and security, which cannot meet requirements for convenient management, simplified security policy definition, and fast deployment of the cloud native applications.

### SUMMARY

To resolve a problem in a conventional technology, the present invention provides a virtual instance creation method based on a cloud computing technology and a cloud management platform. According to the method, a problem of complex operations such as permission management, security policy definition, and deployment of a cloud native application caused by a network model can be resolved, so that efficient and convenient cloud resource management can be implemented.

According to a first aspect, this application provides a virtual instance creation method based on a cloud computing technology. The method is applied to a cloud management platform. The cloud management platform is configured to manage an infrastructure including a plurality of cloud data centers deployed in a distributed manner. A plurality of computing nodes are set in each cloud data center. The method specifically includes the following step: receiving a first virtual instance creation request input by a first tenant, where the first virtual instance creation request includes specification information of a to-be-created first virtual instance and information about a first cloud native application to which the to-be-created first virtual instance belongs. Based on this, the cloud management platform selects to create the first virtual instance on a first computing node that is in a first cloud data center and that can provide a specification matching the specification information. The first virtual instance is configured to run the first cloud native application or one or more microservices in the first cloud native application. The plurality of cloud data centers include the first cloud data center providing the first computing node. Further, the cloud management platform configures, based on the information about the first cloud native application, a first virtual instance manager of the first computing node to mark, with an identifier of the first cloud native application, a service packet sent by the first virtual instance.

In the solution provided in this application, the cloud management platform may obtain a virtual instance creation request input by a tenant, to determine specification information of a virtual instance and information about a cloud native application, and further select, based on the information, a matched computing node to create the virtual instance. In this way, the virtual instance created by the cloud management platform can better match an actual requirement of the tenant. On this basis, a virtual instance manager is configured to mark, with an identifier of the cloud native application run by the virtual instance, a service packet sent by the virtual instance, so that precise management of interworking and access between virtual instances or between different cloud native applications can be implemented, and information transfer between cloud native networks is simplified by using the identifier.

With reference to the first aspect, in a possible implementation of the first aspect, the first virtual instance creation request further includes first site information, and specifically, the method further includes the following step: The cloud management platform selects, from the plurality of cloud data centers, the first cloud data center matching the first site information.

In the solution provided in this application, the virtual instance creation request that is input by the tenant and that is received by the cloud management platform further includes site information. Therefore, the cloud management platform may determine, based on the site information, both a cloud data center and the computing node in which the virtual instance is located and a site at which the virtual instance runs. Based on this, the cloud management platform can further configure, control, and manage network interworking of virtual instances at different sites, to satisfy, on the basis of simplifying a cloud native network architecture, a requirement of the tenant for access and interworking between cloud native applications at different sites.

With reference to the first aspect, in a possible implementation of the first aspect, the cloud management platform receives a first security rule input by the first tenant, where the first security rule indicates permission to access the first cloud native application. The cloud management platform further configures the first virtual instance manager of the first computing node to record the first security rule. Specifically, the first virtual instance manager allows or forbids, according to the first security rule, sending, to the first virtual instance, a service packet to be sent to the first virtual instance by a virtual instance running another cloud native application or one or more microservices in the another cloud native application.

In the solution provided in this application, the cloud management platform performs configuration according to a security rule input by the tenant, and records the security rule in the virtual instance manager. Based on this, when the virtual instance managed by the virtual instance manager is an access or interworking object, and is accessed by a virtual instance in another cloud native application or by a virtual instance in one or more microservices in the another cloud native application, the virtual instance manager determines or authenticates, according to the security rule, a service packet whose access target is the virtual instance managed by the virtual instance manager. When an identifier with which the service packet is marked belongs to an access range allowed by the virtual instance manager, the service packet is allowed to access the virtual instance. Alternatively, when an identifier with which the service packet is marked does not belong to an access range allowed by the virtual instance manager, the service packet is forbidden to access the virtual instance. Optionally, after the service packet is determined and authenticated by the virtual instance manager for the first time, the same service packet is not determined or authenticated again when the security rule does not change.

With reference to the first aspect, in a possible implementation of the first aspect, a second virtual instance is deployed on a second computing node in the infrastructure, where the second virtual instance is configured to run a second cloud native application or one or more microservices in the second cloud native application, and the second computing node is set in one of the plurality of cloud data centers. The method further includes the following specific steps: receiving a second security rule input by the first tenant, where the second security rule indicates permission of the first cloud native application to access the second cloud native application; and configuring a second virtual instance manager of the second computing node to record an identifier of the first cloud native application and the second security rule. A destination address of the service packet sent by the first virtual instance is the second virtual instance. When determining that the identifier of the first cloud native application with which the service packet sent by the first virtual instance is marked is consistent with the identifier recorded by the second virtual instance manager, the second virtual instance manager allows or forbids, according to the security rule, sending the first service packet to the second virtual instance.

In the solution provided in this application, the cloud management platform may configure an access permission of a specific cloud native application according to the security rule input by the tenant. Specifically, the first cloud native application needs to access the second cloud native application. To control the access permission of the first cloud native application, the cloud management platform receives the security rule input by the first tenant, and configures the virtual instance manager of the to-be-accessed second cloud native application to record the security rule and the identifier of the first cloud native application. When the first cloud native application accesses the second cloud native application, the virtual instance manager of the second cloud native application determines a service packet sent by the virtual instance running the first cloud native application. When the identifier recorded by the virtual instance manager of the second cloud native application is consistent with the identifier carried in the first cloud native application, the virtual instance manager of the second cloud native application further determines, according to the configured security rule, to allow or forbid the service packet to access the virtual instance of the second cloud native application. In this way, permissions for cloud native applications to access another cloud native application are controlled based on identifiers of different cloud native applications. In addition, the security rule may be configured across tenants. When the second virtual instance in the second cloud native application is created by a second tenant, the second security rule input by the first tenant may be configured, by the cloud management platform, to be recorded in the second virtual instance manager. Optionally, the second security rule may be configured by the cloud management platform based on permission of the first tenant to configure the second virtual instance.

With reference to the first aspect, in a possible implementation of the first aspect, before the cloud management platform receives the security rule input by the tenant for the first cloud native application, the method specifically further includes the following steps: receiving a second virtual instance creation request input by the first tenant or the second tenant, where the second virtual instance creation request includes specification information of the to-be-created second virtual instance and information about the second cloud native application to which the second virtual instance belongs; selecting to create the second virtual instance on the second computing node that is in a second cloud data center and that can provide a specification matching the specification information; and configuring, based on the information about the second cloud native application, the second virtual instance manager of the second computing node to mark, with an identifier of the second cloud native application, a service packet sent by the second virtual instance.

In the solution provided in this application, the second virtual instance or another virtual instance may be created by the cloud management platform based on a creation request of the first tenant, or may be created based on a creation request of another tenant. Similarly, creation of the second virtual instance should satisfy the specification information in the creation request. Optionally, the second virtual instance may be created on the first computing node in the first cloud data center, or may be created on the second computing node in the second cloud data center. In other words, mutual access between cloud native applications may be performed across cloud data centers and computing nodes, and an access permission may be managed and controlled by using an identifier and a security rule. On this basis, the identifier of the second cloud native application is used to mark the service packet sent by the second virtual instance. When the second virtual instance accesses a virtual instance of another cloud native application, the service packet sent by the second virtual instance carries the identifier of the second cloud native application. In this way, the access permission can be controlled and managed based on the identifier.

With reference to the first aspect, in a possible implementation of the first aspect, the method specifically further includes the following steps: setting a first network interface for the first cloud native application, and binding at least one virtual instance running the microservice in the first cloud native application to the first network interface, where the at least one virtual instance running the microservice in the first cloud native application includes the first virtual instance, and the first network interface is set in the first cloud data center indicated by the first site information; and setting a second network interface for the second cloud native application, and binding at least one virtual instance running the microservice in the second cloud native application to the second network interface, where the at least one virtual instance running the microservice in the second cloud native application includes the second virtual instance, and the second network interface is set in the second cloud data center indicated by second site information. The first network interface and the second network interface are connected to each other through a cloud native network set in the infrastructure.

In the solution provided in this application, at least one virtual instance running a cloud native application is bound to one or more network interfaces. Different network interfaces are set in corresponding cloud data centers based on the site information. The network interfaces are connected to each other through the cloud native network. For example, interworking between the cloud data centers is implemented through a backbone network, a cloud private line, or the like. In this way, when virtual instances in different cloud data centers perform access and interworking, the virtual instances may directly perform access through a bound network interface, to improve efficiency of connection and access.

With reference to the first aspect, in a possible implementation of the first aspect, for the configuring, based on the information about the first cloud native application, a first virtual instance manager of the first computing node to mark, with an identifier of the first cloud native application, a service packet sent by the first virtual instance, the method specifically includes the following step: configuring the first virtual instance manager to encapsulate the service packet into an inner packet of an overlay packet, and set the identifier of the first cloud native application in an outer packet of the overlay packet.

In the solution provided in this application, an identifier in the service packet is configured based on the information about the cloud native application. Specifically, the information about the cloud native application is encapsulated into the outer packet of the overlay packet, and the service packet is encapsulated into the inner packet of the overlay packet. Therefore, when receiving a service packet sent by another virtual instance, the virtual instance manager may identify, by decapsulating the overlay packet, an identifier carried in each service packet. In this way, when a network interface bound to the virtual instance changes continuously, only an identifier of a cloud native application to which the network interface belongs needs to be adjusted, and security policies of all computing nodes no longer need to be modified, so that efficiency of access and interworking between cloud native applications can be improved.

With reference to the first aspect, in a possible implementation of the first aspect, the virtual instance includes a virtual machine or a container.

A second aspect or any implementation of the second aspect is an apparatus implementation corresponding to the first aspect or any implementation of the first aspect. Descriptions in the first aspect or any implementation of the first aspect are applicable to the second aspect or any implementation of the second aspect. Details are not described herein again.

According to a third aspect, this application further provides a cloud network system for a cloud native application. The cloud native network is configured to connect a plurality of network interfaces, and each network interface is bound to one virtual instance. A first virtual instance is configured to: be bound to a first network interface in the plurality of network interfaces, and run a first cloud native application or one or more microservices in the first cloud native application. A second virtual instance is configured to: be bound to a second network interface in the plurality of network interfaces, and run a second cloud native application or one or more microservices in the second cloud native application. A cloud management platform is for receiving a security rule input by a tenant, where the security rule indicates permission of the first cloud native application to access the second cloud native application. The first network interface and/or the second network interface determine/determines, by using the security rule, whether to allow an access packet between the first virtual instance and the second virtual instance to pass.

According to a fourth aspect, this application provides a computing device cluster, including at least one computing device. Each computing device includes a processor and a memory. The processor of the at least one computing device is configured to execute instructions stored in the memory of the at least one computing device, so that the computing device cluster performs the method in any one of the first aspect and the implementations with reference to the first aspect.

According to a fifth aspect, this application provides a computer program product including instructions. When the instructions are run by a computer device cluster, the computer device cluster is enabled to perform the method in any one of the first aspect and the implementations with reference to the first aspect.

According to a sixth aspect, this application provides a computer-readable storage medium, including computer program instructions. When the computer program instructions are executed by a computing device cluster, the computing device cluster performs the method in any one of the first aspect and the implementations with reference to the first aspect.

### BRIEF DESCRIPTION OF DRAWINGS

FIG. 1 is a diagram of a scenario of a cloud management platform for virtual instance creation based on a cloud computing technology according to an embodiment of the present invention;
FIG. 2 is an architectural diagram of a cloud management platform for virtual instance creation based on a cloud computing technology according to an embodiment of the present invention;
FIG. 3 is an architectural diagram of a virtual instance creation method based on a cloud computing technology according to an embodiment of the present invention;
FIG. 4 is a simple flowchart of a virtual instance creation method based on a cloud computing technology according to an embodiment of the present invention;
FIG. 5 is a schematic flowchart of a virtual instance creation method based on a cloud computing technology according to an embodiment of the present invention;
FIG. 6 is another schematic flowchart of a virtual instance creation method based on a cloud computing technology according to an embodiment of the present invention;
FIG. 7 is an architectural diagram of a virtual instance creation method based on a cloud computing technology in an application native cloud network scenario according to an embodiment of the present invention;
FIG. 8 is an architectural diagram of a virtual instance creation method based on a cloud computing technology in a virtual machine scenario according to an embodiment of the present invention;
FIG. 9 is an architectural diagram of a virtual instance creation method based on a cloud computing technology in a container scenario according to an embodiment of the present invention;
FIG. 10 is a diagram of a data format structure of an overlay packet in a virtual instance creation method based on a cloud computing technology according to an embodiment of the present invention;
FIG. 11 is an architectural diagram of a cloud network system in a virtual instance creation method based on a cloud computing technology according to an embodiment of the present invention;
FIG. 12 is a diagram of a structure of a cloud management platform in a virtual instance creation method based on a cloud computing technology according to an embodiment of the present invention;
FIG. 13 is a diagram of a structure of a computing device in a virtual instance creation method based on a cloud computing technology according to an embodiment of the present invention;
FIG. 14 is a diagram of a structure of a computing device cluster in a virtual instance creation method based on a cloud computing technology according to an embodiment of the present invention;
FIG. 15 is a diagram of another structure of a computing device cluster in a virtual instance creation method based on a cloud computing technology according to an embodiment of the present invention; and
FIG. 16 is a diagram of another structure of a computing device cluster in a virtual instance creation method based on a cloud computing technology according to an embodiment of the present invention.

### DESCRIPTION OF EMBODIMENTS

The following clearlyy describes technical solutions in embodiments of the present invention with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and other variants thereof all mean "include but is not limited to", unless otherwise specifically emphasized in another manner.

Some terms and related technologies in this application are first described with reference to the accompanying drawings, to help a person skilled in the art have a better understanding.

Tenant: The tenant is a user who rents an infrastructure. The tenant may register an account on a cloud management platform operated by a public cloud service provider through a browser or another client. The public cloud service provider records accounts of different tenants, and isolates public cloud services of different tenants based on the accounts.

Cloud management platform: The cloud management platform is a platform provided by a public cloud service provider for interacting with a user. The user may register an account on the cloud management platform and rent a public cloud service by using the account, to become a tenant of the public cloud service. The cloud management platform is further used for managing an infrastructure, and isolate, based on accounts of different tenants, computing, network, and/or storage resources rented by different tenants.

Virtual instance: The virtual instance is an instance that is deployed in a cloud data center in an infrastructure and that is configured to run a public cloud service. The virtual instance is an instance configured to provide computing, network, or storage resources. The virtual instance includes but is not limited to, for example, a virtual machine or a container.

Infrastructure: The infrastructure is a facility supporting a cloud computing service, and includes at least one cloud data center. Each cloud data center includes a plurality of computing nodes. A virtual instance like a virtual machine or a container runs on the computing node to implement an elastic cloud computing service. For example, when the infrastructure includes a plurality of cloud data centers, the data centers are remotely connected to each other through a backbone network.

Overlay packet: The overlay packet is an overlay network technology, and specifically indicates a virtual extensible local area network (Virtual Extensible Local Area Network, VXLAN) packet. The VXLAN packet includes an outer packet and an inner packet. A data part of a UDP packet carries a VXLAN header, an inner Ethernet header (Inner Ethernet Header), an inner IP header (Inner IP Header), and a data part (Payload) of an IP packet. The inner Ethernet header records a source MAC address and a destination MAC address of the inner packet. The inner IP header records a source IP address and a destination IP address of the inner packet. The outer packet includes an outer Ethernet header (Outer Ethernet Header), an outer IP header (Outer IP Header), an outer user datagram protocol (User Datagram Protocol, UDP) header (Outer UDP Header), and the VXLAN header.

Cloud native application: The cloud native application is a collection of associated but not independent components (Service, Task, and Worker). These components are combined with a configuration and properly runtime-instantiated, to achieve a unified functional purpose.

Application native cloud (Application Native Cloud, ANC) network: The application native cloud network is a network model used in a cloud computing technology. The model may be used by a tenant to create a virtual instance on the cloud, builds a network environment needed by cloud resources such as computing, storage, and network resources of the tenant, and is an implementation of a cloud native network.

Network interface: In a cloud native network, when a tenant creates a virtual instance, the network interface needs to be invoked, and a site at which the network interface is located and a cloud native application to which the network interface belongs in the cloud native network need to be specified. Network interfaces of sites can directly interwork with each other by creating a global cloud native network environment.

Container (Container): The container is a virtualization technology in a computer operating system. The technology enables a process to run in an independent and isolated environment (including an independent file system, a namespace, a resource view, and the like), to simplify a software deployment procedure, enhance software portability and security, and improve system resource utilization. The container technology is widely applied to service-oriented scenarios in the cloud computing field.

Region (Region): A public cloud service provider sets public cloud data centers in regions located in different geographical locations. Public cloud devices in the public cloud data centers in different regions need to communicate with each other through a remote connection gateway.

Site (Site): The site is a location attribute in an application native cloud network. A cloud data center may be set in different geographical locations, and provides a cloud service for a tenant in a coverage area of the cloud data center in a geographical location. The cloud data center deployed in the geographical location is a site. The site is a parallel model including a core site and an edge site. The site may alternatively be a data center locally set by a tenant.

Global (Global): The global is a location attribute in an application native cloud network, and is an upper level of a site attribute. This level can manage cloud services deployed at different sites around the world.

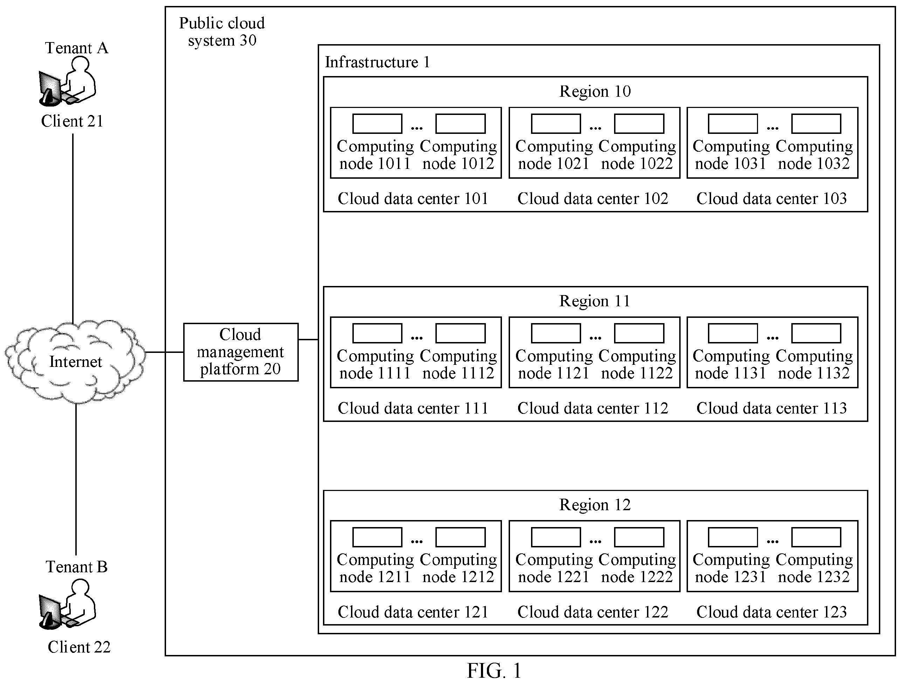

For ease of describing a virtual instance creation method based on a cloud computing technology in an embodiment of the present invention, refer to FIG. 1 first. FIG. 1 is a diagram of a scenario of the virtual instance creation method based on the cloud computing technology according to an embodiment of the present invention. As shown in FIG. 1, a cloud management platform 20 is used for managing an infrastructure 1. The infrastructure 1 includes cloud data center clusters set in a plurality of regions. For example, the plurality of regions include a region 10, a region 11, and a region 12. One cloud data center cluster (not shown in the figure) is set in each region, and each cloud data center cluster includes a plurality of cloud data centers. For example, a cloud data center in the region 10 includes a cloud data center 101, a cloud data center 102, and a cloud data center 103, a cloud data center cluster located in the region 11 includes a cloud data center 111, a cloud data center 112, and a cloud data center 113, and a cloud data center cluster located in the region 12 includes a cloud data center 121, a cloud data center 122, and a cloud data center 123. Each cloud data center further includes a plurality of computing nodes. For example, the data center 101 includes a computing node 1011, a computing node 1012, ..., and the like.

Still refer to FIG. 1. The cloud management platform 20 is used for managing the infrastructure 1. A tenant A connects to the Internet through a client 21, and logs in to the cloud management platform 20 by using an account that is pre-registered on the cloud management platform 20 and that is bound to the tenant A. The cloud management platform 20 provides a configuration interface, to configure a cloud service running in the infrastructure.

For example, the client 21 and a client 22 each may be a terminal device like a mobile phone, a personal computer, a personal digital assistant, or a thin client that has a network access function, or may be a vehicle-mounted host or another terminal device having the network access function.

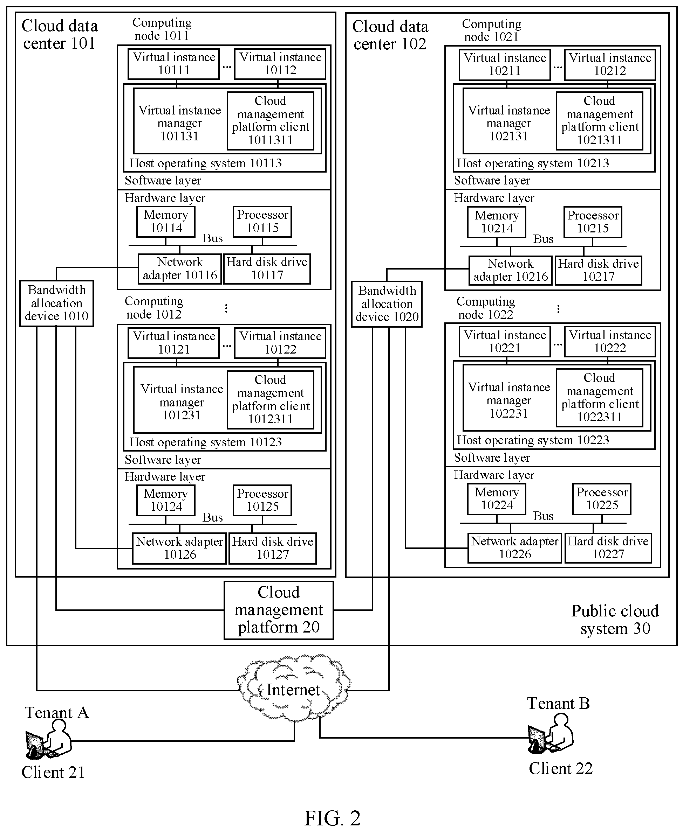

FIG. 2 is a diagram of a system structure of a cloud management platform for virtual instance creation based on a cloud computing technology according to an embodiment of the present invention. Specifically, FIG. 2 shows a specific structure of the cloud data center shown in FIG. 1. As shown in FIG. 2, a cloud data center 101 includes a plurality of computing nodes 1011, 1012, ..., and the like, and the plurality of computing nodes 1011 and 1012 are separately connected to a bandwidth allocation device 1010. The computing node 1011 includes a hardware layer and a software layer. A virtual instance 10111 is set on the software layer of the computing node 1011. The software layer of the computing node 1011 further includes a host operating system 10113. A virtual instance manager 101131 is set on the host operating system 10113. A cloud management platform client 1011311 is further set in the virtual instance manager 101131. The virtual instance manager 101131 is configured to manage the virtual instance 10111, and the virtual instance manager 101131 communicates with the cloud management platform 20 through the cloud management platform client 1011311. When a service packet is sent by another computing node to access the virtual instance in the virtual instance manager 101131, the virtual instance manager 101131 decapsulates the packet, and identifies a source virtual instance of the service packet. The computing node hardware layer of the computing node 1011 includes a memory 10114, a processor 10115, a network adapter 10116, and a hard disk drive 10117. The network adapter 10116 is connected to the bandwidth allocation device 1010 in the cloud data center. The virtual instance 10111 is connected to the Internet through the network adapter 10116. A network packet (including an outgoing packet and an incoming packet) of the virtual instance 10111 communicates with an Internet device through the bandwidth allocation device 1010.

It should be noted that, in this embodiment of the present invention, a quantity of virtual machines may be set as required. This is not limited in this embodiment of the present invention.

In a public cloud system shown in FIG. 1 and FIG. 2, when a tenant creates a virtual instance in the public cloud system, especially when the tenant needs to create a plurality of virtual instances to perform networking and jointly form some services, the tenant needs to be familiar with a plurality of cloud products in a current cloud network model, for example, a virtual private cloud(Virtual Private Cloud, VPC) network, an elastic load balancer (Elastic Load Balancer, ELB), and a network address translation (Network Address Translation, NAT) gateway. In addition, network parameters such as a private network segment and a private network address need to be classified in a configuration process. Because a network model, a configuration parameter, and the like are complex, when virtual instances created by the tenant perform interactive access across regions or cloud data centers, a service packet needs to pass through a plurality of layers. Especially, when network security policy management is performed on different virtual instances, a security policy of a computing node needs to be modified based on a change of a virtual instance running on the computing node. Consequently, a cloud resource management operation is complex. This conflicts with a requirement for fast development, deployment, and management of a cloud native application.

To resolve the foregoing problem, this application provides a virtual instance creation method based on a cloud computing technology. In the method, a virtual instance is created on a determined computing node based on specification information and information about a cloud native application to which the virtual instance belongs that are input by a tenant. Because the virtual instance is configured to run the cloud native application or one or more microservices in the cloud native application, a virtual instance manager managing the virtual instance is configured to record an identifier of the cloud native application running on the virtual instance, and mark, by using the identifier, a service packet sent by the virtual instance. In this way, the virtual instance manager determines a security policy based on the identifier. Further, even if the virtual instance configured to run the cloud native application does not change, the security policy does not need to be repeatedly modified on each computing node.

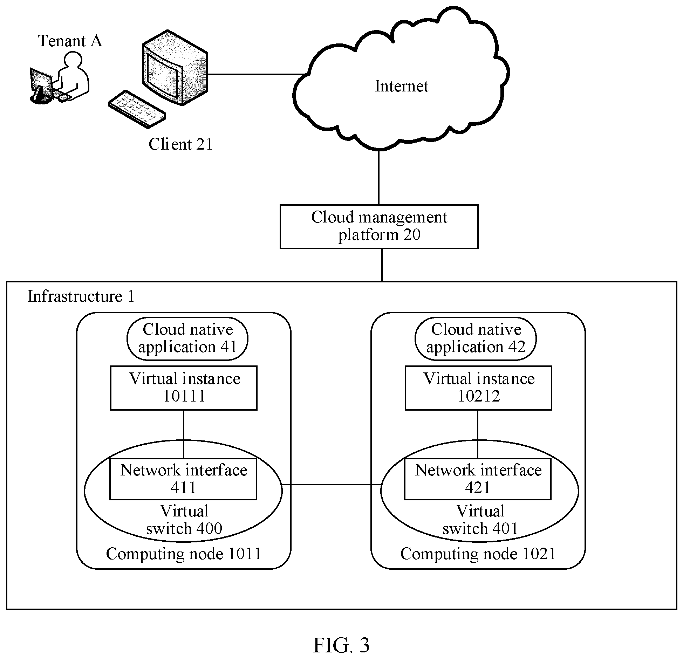

Based on the scenarios described in FIG. 1 and FIG. 2, the following describes in detail, with reference to FIG. 3, the virtual instance creation method based on the cloud computing technology provided in an embodiment of the present invention.

FIG. 3 is an architectural diagram of a virtual instance creation method based on a cloud computing technology according to an embodiment of the present invention. Details are as follows.

A tenant A accesses a cloud management platform 20 through a client 21. The cloud management platform 20 is used for managing an infrastructure 1. A computing node 1011, a computing node 1021, ..., and the like are set in the infrastructure 1. With reference to FIG. 1, the computing node 1011 is set in the cloud data center 101, and the computing node 1021 is set in the cloud data center 102. A virtual instance 10111 running a cloud native application 41 or one or more microservices in the cloud native application 41 is set on the computing node 1011, and a virtual instance 10212 running a cloud native application 42 or one or more microservices in the cloud native application 42 is set on the computing node 1021. When the cloud native application 41 generates, in a running process, a service packet for accessing the cloud native application 42, the virtual instance 10111 sends the service packet to a network interface 411, and the network interface 411 encapsulates the service packet through a virtual switch 400. Optionally, the network interface may be a network endpoint (Network Endpoint, NEP). Further, the virtual switch 400 sends an encapsulated overlay packet from the computing node 1011 to a virtual switch 401 of the computing node 1021, and then the virtual switch 401 decapsulates the encapsulated overlay packet, and forwards a decapsulated overlay packet to a network interface 421. With reference to FIG. 1, the virtual switch 400 is set in the virtual instance manager 101131, and the virtual switch 401 is set in a virtual instance manager 102131. When the service packet sent by the virtual instance 10111 is forwarded by the virtual instance manager 101131, the virtual instance manager 101131 marks the service packet. The virtual instance manager 101131 marks, based on information about the cloud native application 41 by using an identifier of the cloud native application, the service packet sent by the virtual instance 10111. When decapsulating the overlay packet, the virtual instance manager 102131 may identify that the service packet is from the cloud native application 41, and therefore manage, based on the identifier, a security policy for accessing the cloud native application 42.

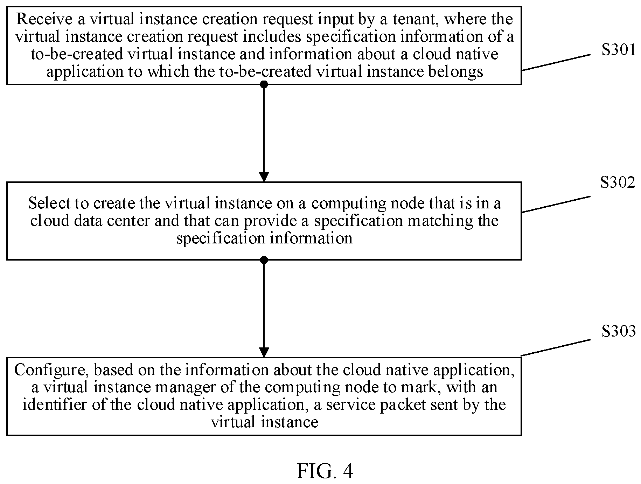

FIG. 4 is a simple flowchart of a virtual instance creation method based on a cloud computing technology according to an embodiment of the present invention. As shown in FIG. 4, the method includes but is not limited to the following steps.

Step S301: A cloud management platform receives a virtual instance creation request input by a tenant, where the virtual instance creation request includes specification information of a to-be-created virtual instance and information about a cloud native application to which the to-be-created virtual instance belongs.

With reference to the architectural diagram shown in FIG. 3, for example, the cloud management platform 20 obtains a virtual instance creation request input by the tenant A, where the virtual instance creation request includes specification information of the to-be-created virtual instance 10111 and the information about the cloud native application 41. The specification information may include a failure domain, a deployment set, a host health status, a host model, a processor architecture, a quantity of processor cores, bandwidth, a memory size, a quantity of network adapters, and the like. This is not limited in the present invention.

The virtual instance creation request input by the tenant is obtained, so that a virtual instance matching a specification requirement of the tenant can be provided for the tenant based on an actual requirement of the tenant.

Step S302: Select to create the virtual instance on a computing node that is in a cloud data center and that can provide a specification matching the specification information.

The cloud management platform selects, from an infrastructure based on the specification information of the virtual instance input by the tenant, the computing node that can match the specification information, to create the virtual instance. The virtual instance is configured to run the cloud native application or one or more microservices in the cloud native application. For example, with reference to FIG. 3, the cloud management platform 20 selects the computing node 1011 that can provide a specification satisfying the specification information input by the tenant, to create the virtual instance 10111. The virtual instance 10111 runs the cloud native application 41 or the one or more microservices in the cloud native application 41.

The virtual instance creation request input by the tenant includes the specification information of the to-be-created virtual instance and the information about the cloud native application. The cloud management platform may select, from the infrastructure based on the specification information, the computing node satisfying the specification information. Optionally, when the tenant A inputs a plurality of virtual instance creation requests, the cloud management platform may provide virtual instances of different computing nodes or a same computing node satisfying the specification information for the tenant A. The different computing nodes may be set in different cloud data centers, or may be set in a same cloud data center. This is not limited in this embodiment of the present invention.

Step 303: Configure, based on the information about the cloud native application, a virtual instance manager of the computing node to mark, with an identifier of the cloud native application, a service packet sent by the virtual instance.

The cloud management platform may configure the virtual instance manager to mark a packet sent by the virtual instance, encapsulate the packet into an overlay packet, and send the overlay packet out. As shown in FIG. 2, the virtual instance manager 101131 is configured in the computing node 1011 on which the virtual instance 10111 is located. With reference to FIG. 3, when the virtual instance 10111 generates the service packet for accessing the virtual instance 10212 in the process of running the cloud native application 41, the service packet needs to pass through the network interface 411 and arrive at the virtual switch 400 for forwarding. The virtual switch 400 is managed by the virtual instance manager 101131 (not shown in the figure) of the computing node 1011. When the service packet passes through the virtual switch 400, the virtual instance manager 101131 marks, based on the configuration of the cloud management platform 20, the service packet by using the identifier of the cloud native application 41.

On the basis of the foregoing steps, the virtual instance creation request input by the tenant is obtained, and the service packet sent by the created virtual instance in the running process is identified based on the information about the cloud native application in the virtual instance creation request. In this way, the service packet is encapsulated to generate an access packet, and then the access packet is sent by the computing node to an access object. It should be noted that the encapsulation may be completed by the virtual instance manager, or may be implemented by a network adapter of the computing node. Therefore, the access packet may carry the identifier of the cloud native application. When a destination computing node receives the access packet and decapsulates the service packet, the destination computing node may identify the identifier carried in the service packet. In this way, the destination computing node manages an access permission of the service packet based on the identifier, to control a security policy of the access object.

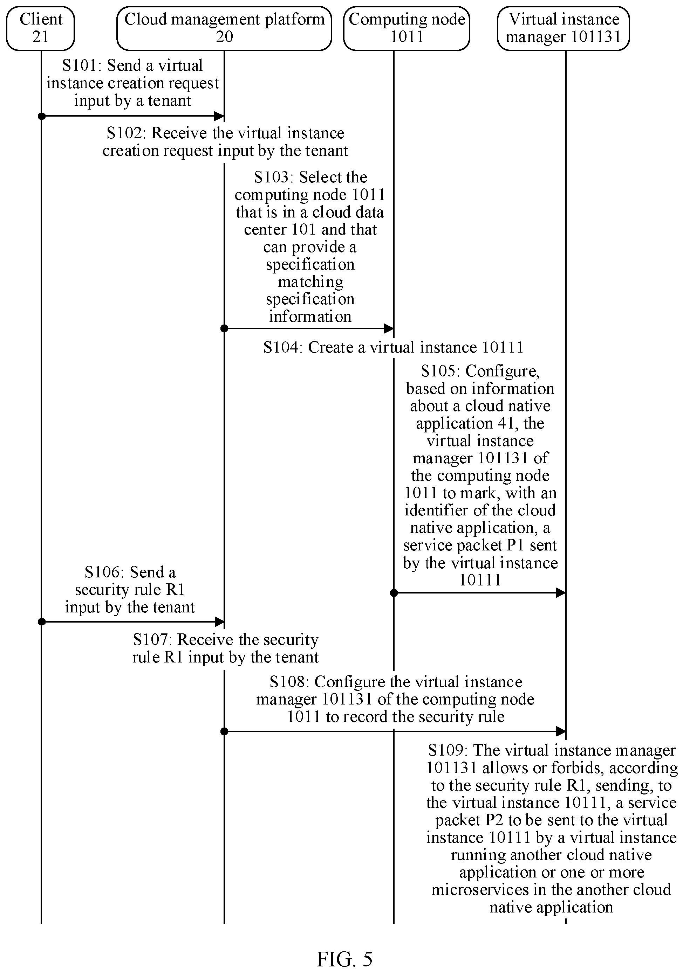

For further clear description, refer to FIG. 5. FIG. 5 is a schematic flowchart of a virtual instance creation method based on a cloud computing technology according to an embodiment of the present invention. Details are as follows.

FIG. 5 further describes the virtual instance creation method provided in FIG. 4 in detail. With reference to the structure shown in FIG. 3, further as shown in FIG. 5, the method includes the following steps.

S101: The client 21 sends the virtual instance creation request input by the tenant A.

The tenant A logs in to the cloud management platform 20 through the client 21, and inputs the virtual instance creation request through an interface provided by the cloud management platform 20, where the virtual instance creation request includes the specification information of the to-be-created virtual instance and the information about the cloud native application to which the to-be-created virtual instance belongs.

It should be noted that the information about the cloud native application may include name information, identifier ID, path information, attribute information, user information, and the like of the cloud native application, and one or more of the foregoing information may identify the service packet. This is not limited in this embodiment of the present invention.

Optionally, the virtual instance creation request input by the tenant may further include site information. The site information specifically indicates a site deployed in a country or region to provide a cloud service for a tenant in a country or region in a specific range. The site information includes a geographical location, service content, a coverage area, and the like. This is not limited in this embodiment of the present invention.

In addition, in this embodiment of the present invention, the client 21 may be a terminal device like a mobile phone, a personal computer, a personal digital assistant, or a thin client that has a network access function, or may be a vehicle-mounted host or another terminal device having the network access function.

S102: The cloud management platform 20 receives the virtual instance creation request input by the tenant A.

The cloud management platform 20 receives the virtual instance creation request input by the tenant A on the interface provided by the cloud management platform 20.

S103: Select the computing node 1011 that is in the cloud data center 101 and that can provide the specification matching the specification information.

The cloud management platform 20 selects, based on the specification information of the virtual instance 10111 and the information about the cloud native application 41 that are included in the virtual instance creation request input by the tenant A, the computing node 1011 as a hardware carrier that carries the virtual instance 10111 for running. The cloud data center 101 can provide the computing node 1011 matching the specification information.

A process in which the cloud management platform 20 selects the computing node to create the virtual instance may be performed based on a configuration input by the tenant A, or the cloud management platform 20 may select the computing node according to a preset rule. This is not limited in this embodiment of the present invention.

Optionally, when the virtual instance creation request input by the tenant A includes the site information, the cloud management platform 20 may select, from a site input by the tenant A, a computing node that matches the specification information and that is in a cloud data center of the site.

S104: Create the virtual instance 10111.

The cloud management platform 20 creates the virtual instance 10111 on the computing node 1011. The virtual instance 10111 is configured to run the cloud native application 41 or the one or more microservices in the cloud native application 41. The cloud native application 41 may be configured by the cloud management platform 20 based on the information about the cloud native application 41 input by the tenant A, or may be configured by the cloud management platform 20 based on the information about the cloud native application 41 input by another tenant having a related permission.

Optionally, the virtual instance 10111 may be further configured to run a part of a microservice in the cloud native application 41. This is not limited in this embodiment of the present invention.

S105: Configure, based on the information about the cloud native application 41, the virtual instance manager 101131 of the computing node 1011 to mark, by using the identifier of the cloud native application, a service packet P1 sent by the virtual instance 10111.

The cloud management platform 20 configures, based on the information about the cloud native application 41, the virtual instance manager 101131 of the computing node 1011 to mark, by using the identifier of the cloud native application 41, the service packet P1 sent by the virtual instance 10111.

S106: Send a security rule R1 input by the tenant.

The tenant A logs in to the cloud management platform 20 through the client 21, and inputs the security rule R1 through the interface provided by the cloud management platform 20. The security rule R1 is used to manage permission to access the cloud native application 41. When another cloud native application generates a service packet for accessing the cloud native application 41, the security rule R1 determines whether the service packet has the permission to access the cloud native application 41.

It should be noted that, regardless of the virtual instance creation request or the security rule input by the tenant, the input mentioned herein may be input directly performed by the tenant on an input interface provided by the cloud management platform, or may be selected by the tenant based on different options provided by the cloud management platform.

S107: Receive the security rule R1 input by the tenant.

The cloud management platform 20 receives the security rule R1 input by the tenant A.

S108: Configure the virtual instance manager 101131 of the computing node 1011 to record the security rule R1.

The cloud management platform 20 configures the virtual instance manager 101131 in the computing node 1011 to record the security rule R1 input by the tenant.

S109: The virtual instance manager 101131 allows or forbids, according to the security rule R1, sending, to the virtual instance 10111, a service packet P2 to be sent to the virtual instance 10111 by a virtual instance running another cloud native application or one or more microservices in the another cloud native application.

It can be learned from step S105 that, the virtual instance manager 101131 marks, based on the identifier of the cloud native application 41, the service packet P1 sent by the virtual instance 10111 running the cloud native application 41 or the one or more microservices in the cloud native application 41. Similarly, the virtual instance running the another cloud native application or the one or more microservices in the another cloud native application is further set in the infrastructure. When the another virtual instance generates, in a running process, the service packet P2 for accessing the virtual instance 10111, the service packet P2 is also marked with an identifier of the cloud native application run by the another virtual instance. In this way, when the service packet P2 passes through the virtual instance manager 101131 in the computing node 1011, the virtual instance manager 101131 identifies the identifier that is of the cloud native application to which the another virtual instance belongs and with which the service packet P2 is marked, and determines, based on permission that is of the service packet P2 to access the virtual instance 10111 and that is in the security rule R1 recorded by the virtual instance manager 101131, whether to send the service packet P2 to the virtual instance 10111.

Based on the foregoing steps, the access permission and the security policy are managed by using the identifier of the cloud native application. Specifically, the identifier of the cloud native application is used to mark the service packet sent by the virtual instance, and then the identifier of the cloud native application is identified and authenticated. In this way, in a process of forwarding the service packet, permission management and control can be performed without relying solely on a source IP address and a destination IP address. For example, there are a plurality of computing nodes, a plurality of cloud native applications, and a plurality of virtual instances configured to run these cloud native applications in the infrastructure. When a virtual instance invokes, in a process of running a cloud native application, a different virtual instance to run a plurality of microservices in the same cloud native application, a changing virtual instance needs to be configured with a changing network interface correspondingly. The security policy is managed based on the identifier of the cloud native application, so that security policy modification on all computing nodes can be avoided when an IP address changes due to a change of the network interface, and only an identifier of a cloud native application to which the changing network interface belongs needs to be configured. This simplifies security policy configuration and improves permission management efficiency.

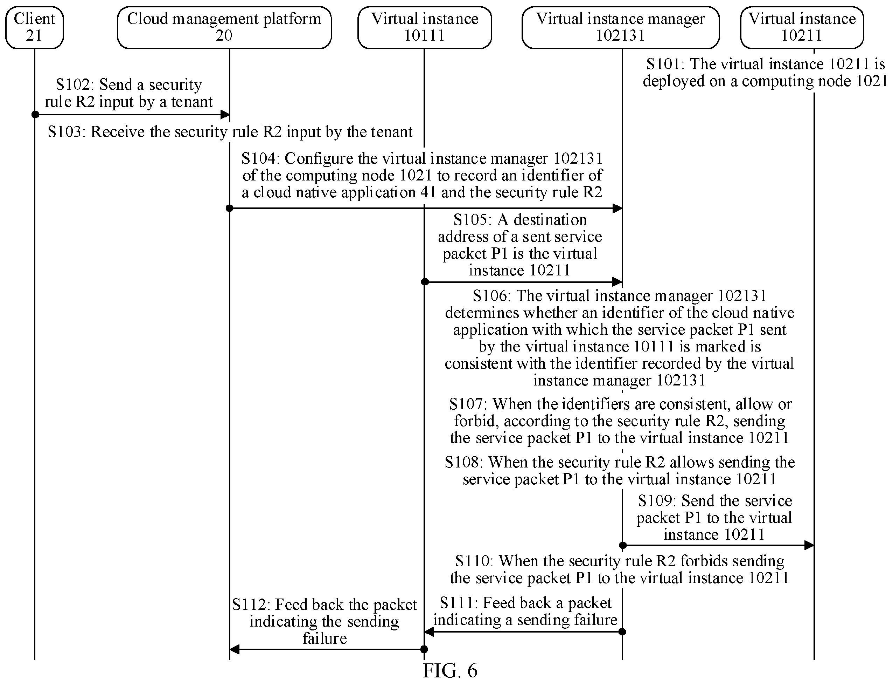

In an embodiment of the present invention, FIG. 6 is another schematic flowchart of a virtual instance creation method based on a cloud computing technology according to an embodiment of the present invention, Descriptions are provided with reference to FIG. 3. Details are as follows.

S101: A virtual instance 10211 is deployed on the computing node 1021.

The computing node 1021 set in the cloud data center 102 is deployed in the infrastructure 1, and the virtual instance 10211 is further set on the computing node 1021. The virtual instance 10211 is configured to run the cloud native application 42 or the one or more microservices in the cloud native application 42.

S102: Send a security rule R2 input by the tenant.

The tenant A logs in to the cloud management platform 20 through the client 21, and inputs the security rule R2 on an interface provided by the cloud management platform 20, where the security rule R2 is used to manage an access permission for the cloud native application 41 to access the cloud native application 42.

S103: Receive the security rule R2 input by the tenant.

The cloud management platform 20 receives the security rule R2 input by the tenant A.

Optionally, the virtual instance 10211 may alternatively be created in the infrastructure based on a virtual instance creation request input by the tenant A or a tenant B. Specifically, before the cloud management platform 20 receives the security rule R2 input by the tenant A, the cloud management platform 20 may further receive the virtual instance creation request that is of the virtual instance 10211 and that is input by the tenant A or the tenant B from a client corresponding to the tenant A or the tenant B. The virtual instance creation request includes specification information of the virtual instance 10211 and information about the cloud native application 42. The cloud management platform 20 selects, based on the virtual instance creation request, to create the virtual instance 10211 on the computing node 1021 that is in the cloud data center 102 and that can provide a specification matching the specification information. On this basis, the virtual instance manager 102131 that is set on the computing node 1021 and that is configured to manage the virtual instance 10211 is configured based on information about the cloud native application 42, to mark, with an identifier of the cloud native application 42, a service packet sent by the virtual instance 1021.

S104: Configure the virtual instance manager 102131 of the computing node 1021 to record the identifier of the cloud native application 41 and the security rule R2.

The cloud management platform 20 configures the virtual instance manager 102131 set on the computing node 1021 to record the identifier of the cloud native application 41 and the security rule R2.

S105: A destination address of a service packet P1 sent by the virtual instance 10111 is the virtual instance 10211.

The virtual instance 10111 generates, in the process of running the cloud native application 41 or the one or more microservices in the cloud native application 41, the service packet P1 for accessing the virtual instance 10211, and a destination IP address of the service packet P1 is the virtual instance 10211.

S106: The virtual instance manager 102131 determines whether the identifier of the cloud native application 41 with which the service packet P1 sent by the virtual instance 10111 is marked is consistent with the identifier recorded by the virtual instance manager 102131.

When the service packet P1 arrives at the computing node 1021, the virtual instance manager 102131 identifies the identifier included in the service packet, determines whether the cloud native application 41 with which the service packet P1 sent by the virtual instance 10111 is marked is consistent with the identifier recorded by the virtual instance manager 102131, and if yes, performs a next step, or if no, forbids the service packet P1 from accessing the virtual instance 10211.

S107: When the identifiers are consistent, allow or forbid, according to the security rule R2, to send the service packet P1 to the virtual instance 10211.

When determining that the identifier of the cloud native application 41 with which the service packet P1 is marked is consistent with the identifier recorded by the virtual instance manager 102131, the virtual instance manager 102131 determines, according to the recorded security rule R2, whether to allow or forbid sending the service packet P1 to the virtual instance 10211.

S108: When the security rule R2 allows sending the service packet P1 to the virtual instance 10211.

When the security rule R2 recorded by the virtual instance manager 102131 allows sending the service packet P1 to the virtual instance 10211, a next step is performed.

S109: Send the service packet P1 to the virtual instance 10211.

The virtual instance manager 102131 forwards the received service packet P1 to the virtual instance 10211.

S110: When the security rule R2 forbids sending the service packet P1 to the virtual instance 10211.

When the security rule R2 recorded by the virtual instance manager 102131 forbids sending the service packet P1 to the virtual instance 10211, the service packet P1 is not forwarded by the virtual instance manager 102131.

S111: Feed back a packet indicating a sending failure.

The virtual instance manager 102131 feeds back, to the virtual instance 10111, the packet indicating the sending failure of the service packet P1.

S112: Feed back the packet indicating the sending failure.

The virtual instance manager 102131 feeds back, to the cloud management platform 20, the packet indicating the sending failure of the service packet P1, and the cloud management platform 20 records the sending failure.

In an embodiment of the present invention, for example, a company configures a financial cloud native application and a human resource cloud native application. The financial cloud native application is run by the virtual instance 10111, and the human resource cloud native application is run by the virtual instance 10211. The virtual instance 10111 is set on the computing node 1011. The computing node 1011 and the computing node 1021 may be deployed in a same cloud data center, or may be deployed in different cloud data centers. Similarly, the computing node 1011 and the computing node 1021 may be deployed at a same site, or may be deployed at different sites. For ease of description, in this embodiment, the computing node 1011 is deployed in the cloud data center 101, the virtual instance 10211 is set on the computing node 1021, and the computing node 1021 is deployed in the cloud data center 102. The computing node 1011 and the computing node 1021 belong to two different sites.

When the human resource cloud native application does not expect to be accessed by another cloud native application or one or more microservices in the another cloud native application, the cloud management platform 20 may configure the security rule R1 to forbid the another cloud native application or the one or more microservices in the another cloud native application to access the human resource cloud native application, and configure the virtual instance manager 102131 in the computing node 1021 to record the security rule R1. The virtual instance 10111 generates, in the running process, the service packet P1 for accessing the virtual instance 10211. The service packet P1 is marked by the virtual instance manager 101131 and carries an identifier of the financial cloud native application. When the service packet P1 arrives at the virtual instance manager 102131, the virtual instance manager 102131 determines that the identifier of the cloud native application carried in the service packet P1 belongs to the another cloud native application or the one or more microservices in the another cloud native application, forbids access of the service packet P1, and stops forwarding the service packet P1 to the virtual instance 10211.

When the human resource cloud native application forbids access of only the financial cloud native application or one or more microservices in the financial cloud native application, and allows access of another cloud native application, the company may further configure the security rule R2 through the cloud management platform 20. The security rule R2 forbids the financial cloud native application to access the human resource cloud native application. In addition, the virtual instance manager 102131 on the computing node 1021 is configured to record the security rule R2 and an identifier of the financial cloud native application forbidden to access the human resource cloud native application. The virtual instance 10111 generates, in the running process, the service packet P1 for accessing the virtual instance 10211. The service packet P1 is marked by the virtual instance manager 101131 and carries the identifier of the financial cloud native application. When the service packet P1 arrives at the virtual instance manager 102131, the virtual instance manager 102131 determines that the identifier of the cloud native application carried by the virtual instance 10111 is consistent with the identifier recorded by the virtual instance manager 102131, and the recorded security rule R2 forbids access of a service packet marked with the identifier, so that the virtual instance manager 102131 stops forwarding the service packet P1 to the virtual instance 10211.

In the foregoing virtual instance creation method based on the cloud computing technology, when a cloud native application or one or more microservices in the cloud native application need to set, in a service, a precise security policy to manage an access permission of another cloud native application or one or more microservices in the another cloud native application, according to this technical solution, permission management on an access end can be implemented through identifier identification and determining at a destination end. Especially, when security policies are configured for a large quantity of cloud native applications and microservices included in the cloud native applications, configuration efficiency is improved, and complexity of a configuration operation is greatly reduced.

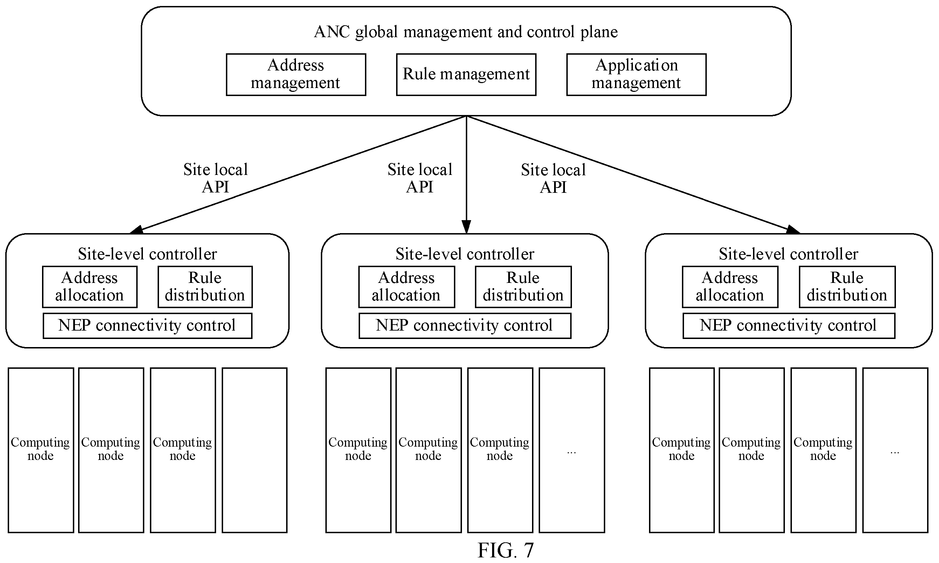

Based on the virtual instance creation method implemented in the foregoing steps, the present invention further provides an embodiment in an application native cloud network. FIG. 7 is an architectural diagram of a virtual instance creation method based on a cloud computing technology in an application native cloud network scenario according to an embodiment of the present invention. Details are as follows.

In the application native cloud network scenario, a global management and control plane and site (Site)-level controllers are included. A global API may be invoked to configure address management, rule management, and application management on the global management and control plane. ANC is a global model. This model includes a network address range specified by a tenant. If the tenant does not specify the network address range, the ANC may allocate the network address range to the tenant.

Specifically, the ANC may automatically allocate a managed address. A global management and control plane of the ANC divides an IP address pool included in a network address range of the tenant in the ANC into several small IP address pools. In other words, management is performed in an address segmentation manner. The following steps are included.
(a) When the tenant creates a network interface at a site based on the ANC, an address allocation module in a site-level controller of the ANC automatically allocates an address from an address pool of the site.
(b) If the address pool of the site is used up, the address allocation module in the site-level controller applies for new address space from a global-level address management module. After receiving this request, the global address management module obtains a segment address pool from segment address pools of an idle address pool, and sends the segment address pool to the site-level address allocation module, to supplement the address pool of the site.
(c) After all addresses in a segment address pool of the site-level controller are released, the segment is reclaimed from the address pool of the site. In other words, the segment address pool no longer belongs to the site, is reclaimed to the idle address pool of the ANC, and may be allocated to another site in the future.

In an embodiment of the present invention, with reference to FIG. 3, when creating the network interface based on the ANC, the tenant does not need to specify an IP address because an ANC management and control plane allocates an address to the network interface, but needs to specify a site at which the network interface is located and a cloud native application to which the network interface is bound. When the network interface forwards a service packet sent by a virtual instance in which the cloud native application is located, the network interface is configured by a virtual instance manager to integrate an identifier of the cloud native application. Then, each packet sent from the network interface carries an identifier of a cloud native application to which the network interface belongs.

Based on this, after a security rule input by the tenant is obtained, the IP address does not need to be configured, and only an access end cloud native application that can be accessed needs to be determined at a destination end. The security rule is delivered to a data plane through the management and control plane, to deploy a security policy.

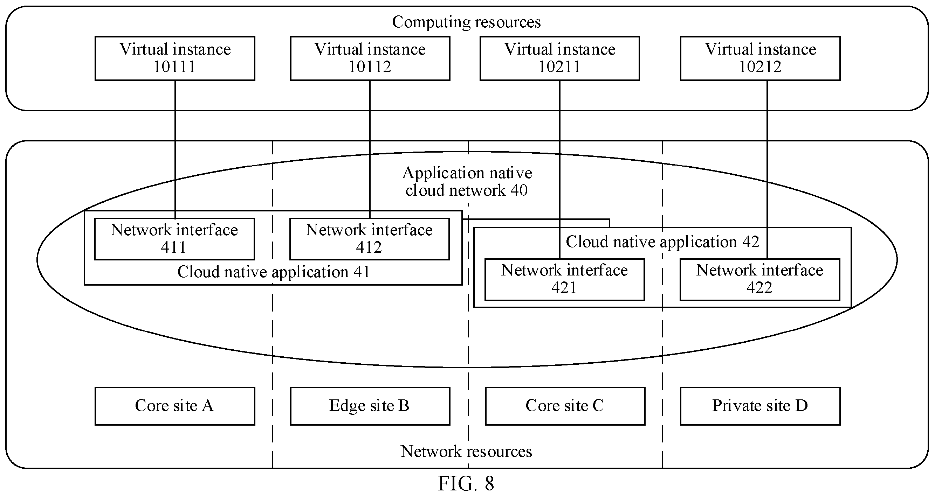

In the foregoing ANC scenario, an embodiment of the present invention further discloses an implementation of a virtual machine instance. FIG. 8 is an architectural diagram of a virtual machine instance in a virtual instance creation method based on a cloud computing technology according to an embodiment of the present invention. Details are as follows.

A virtual instance 10111, a virtual instance 10112, a virtual instance 10211, and a virtual instance 10212 are all virtual machines. The virtual instance 10111 and the virtual instance 10112 are configured to run a cloud native application 41. The virtual instance 10211 and the virtual instance 10212 are configured to run a cloud native application 42. The cloud native application 41 and the cloud native application 42 communicate in an application native cloud network 40. The virtual instance 10111 is deployed in a cloud data center 101 in a core site A, and is bound to a network interface 411 set in the cloud data center 101 indicated by the core site A, to implement network access. The virtual instance 10112 is deployed in the cloud data center 101 at an edge site B, and is bound to a network interface 412 set in the cloud data center indicated by the edge site B, to implement network access. The virtual instance 10211 is deployed in a cloud data center 102 in a core site C, and is bound to a network interface 421 set in the cloud data center 102 indicated by the core site C, to implement network access. The virtual instance 10212 is deployed at a private site D, and is bound to a network interface 422 of a local data center indicated by the private site D, to implement network access. The edge site B, the core site A, and the core site C may be in a same geographical location or different geographical locations. The private site belongs to the local data center of a tenant.

For example, the tenant may use an interface to create a virtual machine and an auto scaling (Auto Scaling, AS) group. When creating the virtual machine, the tenant needs to invoke a virtual network interface to create a corresponding NEP. In this case, the tenant does not need to specify a network-related parameter, for example, Region, VPC, Subnet, AZ, and other information, and only needs to specify a site at which the NEP is located and a cloud native application to which the NEP belongs in ANC. On a network resource side, direct interworking between NEPs at different sites may be implemented by creating a global ANC network. In this way, an access permission of the cloud native application can be managed by configuring a security policy for the cloud native application according to the foregoing embodiment.

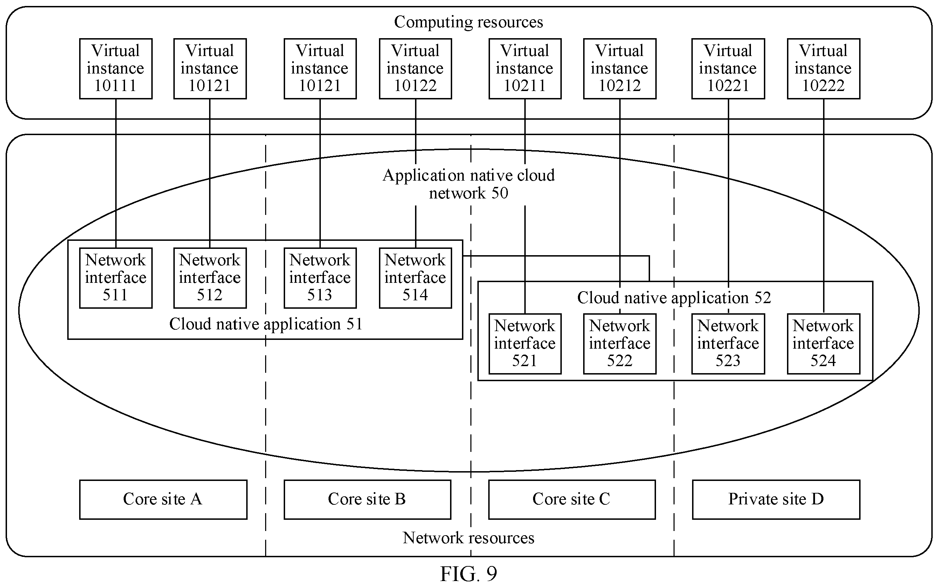

In the ANC scenario, an embodiment of the present invention further discloses an implementation of a container instance. FIG. 9 is an architectural diagram of a container instance in a container creation method based on a cloud computing technology according to an embodiment of the present invention. Details are as follows.

Computing resources in the figure include a virtual instance 10111, a virtual instance 10112, a virtual instance 10121, a virtual instance 10122, a virtual instance 10211, a virtual instance 10212, a virtual instance 10221, and a virtual instance 10222. The virtual instances are all containers. The virtual instance 10111, the virtual instance 10112, the virtual instance 10121, and the virtual instance 10122 are configured to run a cloud native application 51. The virtual instance 10211, the virtual instance 10212, the virtual instance 10221, and the virtual instance 10222 are configured to run a cloud native application 52. The cloud native application 51 and the cloud native application 52 communicate in an application native cloud network 50. The virtual instance 10111 and the virtual instance 10112 are deployed at a core site A, and are respectively bound to a network interface 511 and a network interface 512, to implement network access. The virtual instance 10121 and the virtual instance 10122 are deployed at an edge site B, and are respectively bound to a network interface 513 and a network interface 514, to implement network access. The virtual instance 10211 and the virtual instance 10212 are deployed at a core site C, and are respectively bound to a network interface 521 and a network interface 522, to implement network access. The virtual instance 10221 and the virtual instance 10222 are deployed at a private site D, and are respectively bound to a network interface 523 and a network interface 524, to implement network access. The edge site B, the core site A, and the core site C may be in a same geographical location or different geographical locations. The private site belongs to a local data center of a tenant.

For example, in a container instance scenario, the tenant does not need to care about interworking between a plurality of regions. Instead, the tenant only needs to create a global ANC, and NEPs of sites can directly interwork with each other. Based on automatic allocation of IP addresses by the ANC, in a process of creating a network interface to bind a container instance, the IP addresses can be bound to network interfaces without configuring a network address range. Through matching of site information and based on information about a cloud native application to which each container instance belongs, on the basis of interconnection, a security policy may be configured by using an identifier of the cloud native application as an identification object, to simplify access permission management. A specific configuration process is described in the foregoing steps.

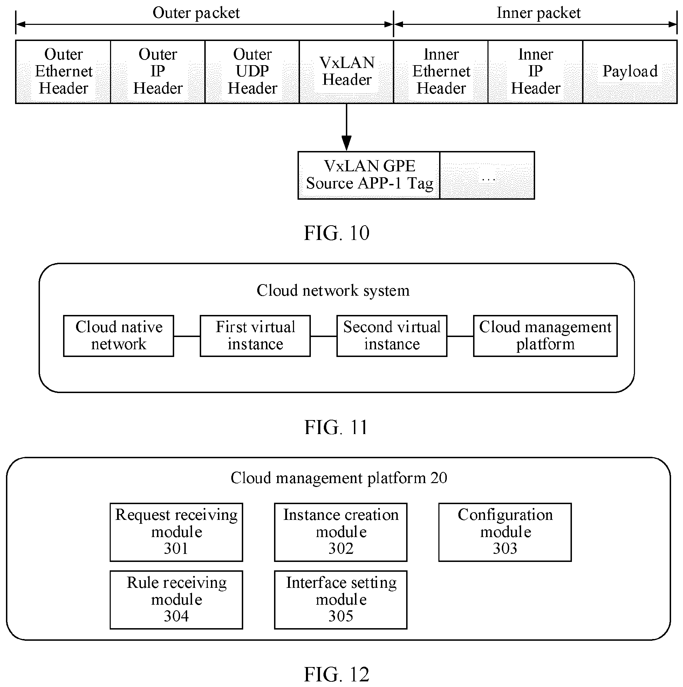

FIG. 10 is a diagram of a data format structure of an overlay packet in a virtual instance creation method based on a cloud computing technology according to an embodiment of the present invention. As shown in FIG. 10, the overlay packet in this embodiment of the present invention may be encapsulated in a VXLAN format. Details are as follows.

A VXLAN packet encapsulates an inner packet into a data part (payload) of a UDP packet. The data part of the UDP packet carries a VXLAN header, an inner Ethernet header (Inner Ethernet Header), an inner IP header (Inner IP Header), and a data part (Payload) of an IP packet. The inner packet includes the inner Ethernet header, the inner IP header, and the data part (Payload) of the IP packet. The inner Ethernet header records a source MAC address and a destination MAC address of the inner packet, and the inner IP header records a source IP address and a destination IP address of the inner packet.

The VXLAN packet further includes a tunnel encapsulation header. The tunnel encapsulation header includes an outer Ethernet header (Outer Ethernet Header), an outer IP header (Outer IP Header), an outer user datagram protocol (User Datagram Protocol, UDP) header (Outer UDP Header), and the VXLAN header. The VXLAN header includes a VXLAN Flags field (8 bits), a VNI field (14 bits), and a Reserved field (24 bits).

The outer Ethernet header records a source MAC address of a VXLAN tunnel endpoint (VXLAN Tunnel Endpoint, VTEP) and a destination MAC address of the VXLAN tunnel terminal. The outer IP header records a source IP address of the VXLAN tunnel terminal and a destination IP address of the VXLAN tunnel terminal.

The VXLAN tunnel terminal may also be referred to as a VTEP device. The VTEP device is an endpoint of a VXLAN tunnel, and is configured to encapsulate the inner packet. The outer Ethernet header, the outer IP header, the outer user datagram protocol header, and the VXLAN header are added to the inner packet to generate the VXLAN packet, and the VXLAN packet is sent to another VTEP device. In addition, a VXLAN packet received from another VTEP device may be decapsulated. An outer Ethernet header, an outer IP header, an outer user datagram protocol header, and a VXLAN header are removed from the VXLAN packet to obtain an inner packet, and VNI is obtained from the VXLAN header.

In this embodiment of the present invention, a virtual instance manager may be configured as a VXLAN tunnel terminal to encapsulate a service packet sent by a virtual instance, and encapsulate the service packet into the inner packet of the overlay packet, namely, the payload part in the UDP packet. An identifier of a cloud native application is set in an outer packet of the overlay packet. Specifically, the identifier of the cloud native application may be set in the VXLAN header by using a VXLAN GPE protocol, and the VXLAN header is used as the outer packet. In this way, when the overlay packet arrives at a virtual instance manager at a destination end, the identifier of the cloud native application may be identified in a process of decapsulating the overlay packet, and then a security policy is determined according to a security rule.

It should be noted that VXLAN is only one type of overlay network technology. In this embodiment of the present invention, the VXLAN is merely used as an example for description in this embodiment of the present invention, and a type of the overlay packet is not limited.

Optionally, the virtual instance in this embodiment of the present invention is a virtual machine or a container.

An embodiment of the present invention further provides a cloud network system. FIG. 11 is an architectural diagram of a cloud network system in a virtual instance creation method based on a cloud computing technology according to an embodiment of the present invention. Details are as follows.

For example, the cloud network system includes a cloud native network 40, a first virtual instance 10111, a second virtual instance 10211, and a cloud management platform 20. The cloud native network 40 is configured to connect a plurality of network interfaces, and each network interface is bound to one virtual instance. The first virtual instance 10111 is configured to: be bound to a first network interface 411 in the plurality of network interfaces, and run a first cloud native application 41 or one or more microservices in the first cloud native application 41. The second virtual instance 10211 is configured to: be bound to a second network interface 421 in the plurality of network interfaces, and run a second cloud native application 42 or one or more microservices in the second cloud native application 42. The cloud management platform 20 is for receiving a security rule input by a tenant A, where the security rule indicates permission of the first cloud native application 41 to access the second cloud native application 42. The first network interface 411 and/or the second network interface 421 determine/determines, by using the security rule, whether to allow an access packet between the first virtual instance 10111 and the second virtual instance 10211 to pass.

This application further provides a cloud management platform. FIG. 12 is a diagram of a structure of a cloud management platform in a virtual instance creation method based on a cloud computing technology according to an embodiment of the present invention. Details are as follows.

A request receiving module 301 is configured to receive a first virtual instance creation request input by a first tenant, where the first virtual instance creation request includes specification information of a to-be-created first virtual instance and information about a first cloud native application to which the to-be-created first virtual instance belongs. The request receiving module 301 is further configured to receive a second virtual instance creation request input by the first tenant or a second tenant, where the second virtual instance creation request includes specification information of a to-be-created second virtual instance and information about a second cloud native application to which the to-be-created second virtual instance belongs.

An instance creation module 302 is configured to select to create the first virtual instance on a first computing node that is in a first cloud data center and that can provide a specification matching the specification information, where the first virtual instance is configured to run the first cloud native application or one or more microservices in the first cloud native application, and a plurality of cloud data centers include the first cloud data center. The instance creation module 302 is further configured to select to create the second virtual instance on a second computing node that is in a second cloud data center and that can provide a specification matching the specification information.

A configuration module 303 is configured to configure, based on the information about the first cloud native application, a first virtual instance manager of the first computing node to mark, with an identifier of the first cloud native application, a service packet sent by the first virtual instance. The configuration module 303 is further configured to configure the first virtual instance manager of the first computing node to record a first security rule. The configuration module 303 is further configured to configure a second virtual instance manager of the second computing node to record an identifier of the first cloud native application and a second security rule. The configuration module 303 is further configured to configure, based on the information about the second cloud native application, the second virtual instance manager of the second computing node to mark, with an identifier of the second cloud native application, a service packet sent by the second virtual instance.

A rule receiving module 304 is configured to receive the first security rule input by the first tenant, where the first security rule indicates permission to access the first cloud native application. The rule receiving module 304 is further configured to receive the second security rule input by the first tenant, where the second security rule indicates permission of the first cloud native application to access the second cloud native application.

An interface setting module 305 is configured to: set a first network interface for the first cloud native application, and bind at least one virtual instance running the microservice in the first cloud native application to the first network interface, where the at least one virtual instance running the microservice in the first cloud native application includes the first virtual instance, and the first network interface is set in the first cloud data center indicated by first site information. The interface setting module 305 is further configured to: set a second network interface for the second cloud native application, and bind at least one virtual instance running a microservice in the second cloud native application to the second network interface, where the at least one virtual instance running the microservice in the second cloud native application includes the second virtual instance, and the second network interface is set in the second cloud data center indicated by second site information.

It should be noted that the tenant in the foregoing embodiment may be replaced with a plurality of other tenants, and the foregoing modules may implement corresponding technical functions. This is not limited in this embodiment of the present invention.

The request receiving module 301, the instance creation module 302, the configuration module 303, the rule receiving module 304, and the interface setting module 305 may all be implemented by using software or hardware. For example, the following describes an implementation of the request receiving module 301 by using the request receiving module 301 as an example. Similarly, for implementations of the instance creation module 302, the configuration module 303, the rule receiving module 304, and the interface setting module 305, refer to the implementation of the request receiving module 301.

The module is used as an example of a software functional unit, and the request receiving module 301 may include code running on a virtual instance. The virtual instance may include at least one of a physical host (a computing device), a virtual machine, and a container. Further, there may be one or more virtual instances. For example, the request receiving module 301 may include code running on a plurality of hosts/virtual machines/containers. It should be noted that the plurality of hosts/virtual machines/containers configured to run the code may be distributed in a same region, or may be distributed in different regions.

The module is used as an example of a hardware functional unit, and the request receiving module 301 may include at least one computing device, for example, a server. Alternatively, the request receiving module 301 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

It should be noted that, in another embodiment, the request receiving module 301 may be configured to perform any step in the virtual instance creation method based on the cloud computing technology, the instance creation module 302 may be configured to perform any step in the virtual instance creation method based on the cloud computing technology, the configuration module 303 may be configured to perform any step in the virtual instance creation method based on the cloud computing technology, the rule receiving module 304 may be configured to perform any step in the virtual instance creation method based on the cloud computing technology, and the interface setting module 305 may be configured to perform any step in the virtual instance creation method based on the cloud computing technology. Steps that the request receiving module 301, the instance creation module 302, the configuration module 303, the rule receiving module 304, and the interface setting module 305 are responsible for implementing may be specified as required. The request receiving module 301, the instance creation module 302, the configuration module 303, the rule receiving module 304, and the interface setting module 305 separately implement different steps in the virtual instance creation method based on the cloud computing technology, to implement all functions of the cloud management platform.

The foregoing describes in detail the method, the apparatus, and the system in embodiments of this application. To better implement the foregoing solutions in embodiments of this application, correspondingly, the following further provides a related device configured to cooperate in implementing the foregoing solutions.

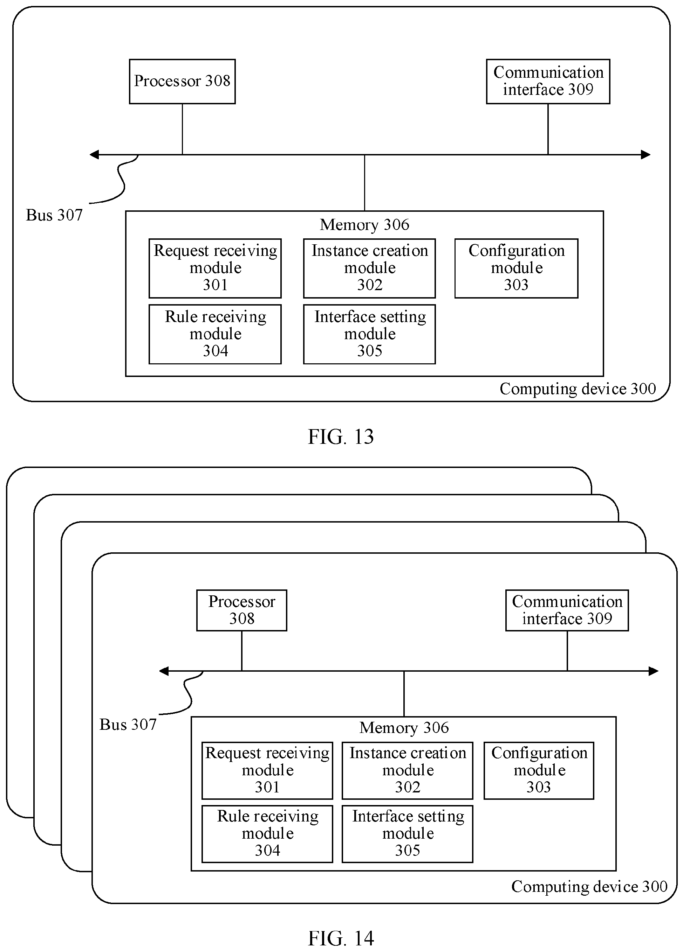

This application provides a computing device. FIG. 13 is a diagram of a structure of a computing device in a virtual instance creation method based on a cloud computing technology according to an embodiment of the present invention. The computing device 300 includes a bus 307, a processor 308, a memory 306, and a communication interface 309. The processor 308, the memory 306, and the communication interface 309 communicate with each other through the bus 307. The computing device 300 may be a server or a terminal device. It should be understood that quantities of processors and memories in the computing device 300 are not limited in this application.

The bus 307 may be a peripheral component interconnect (peripheral component interconnect, PCI) bus, an extended industry standard architecture (extended industry standard architecture, EISA) bus, or the like. The bus may be divided into an address bus, a data bus, a control bus, and the like. For ease of indication, the bus is indicated by using only one line in FIG. 13. However, it does not indicate that there is only one bus or only one type of bus. The bus 307 may include a path for transmitting information between components (for example, the memory 306, the processor 308, and the communication interface 309) of the computing device 300.

The processor 308 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 306 may include a volatile memory (volatile memory), for example, a random access memory (random access memory, RAM). The processor 308 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 306 stores executable program code, and the processor 308 executes the executable program code to separately implement functions of the request receiving module 301, the instance creation module 302, the configuration module 303, the rule receiving module 304, and the interface setting module 305, to implement the virtual instance creation method based on the cloud computing technology. In other words, the memory 306 stores instructions used by the cloud management platform to perform the virtual instance creation method based on the cloud computing technology.

The communication interface 309 uses a transceiver module, for example, but not limited to, a network interface card or a transceiver, to implement communication between the computing device 300 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

FIG. 14 is a diagram of a structure of a computing device cluster in a virtual instance creation method based on a cloud computing technology according to an embodiment of this application. As shown in FIG. 14, the computing device cluster includes at least one computing device 300, and a memory 306 in one or more computing devices 300 in the computing device cluster may store same instructions used by a cloud management platform to perform the virtual instance creation method based on the cloud computing technology.

In some possible implementations, the one or more computing devices 300 in the computing device cluster may alternatively be configured to execute some instructions used by the cloud management platform to perform the virtual instance creation method based on the cloud computing technology. In other words, a combination of the one or more computing devices 300 may jointly execute the instructions used by the cloud management platform to perform the virtual instance creation method based on the cloud computing technology.

It should be noted that the memories 306 in different computing devices 300 in the computing device cluster may store different instructions, to perform some functions of the cloud management platform. In other words, the instructions stored in the memories 306 in the different computing devices 300 may implement functions of one or more of a request receiving module 301, an instance creation module 302, a configuration module 303, a rule receiving module 304, and an interface setting module 305.

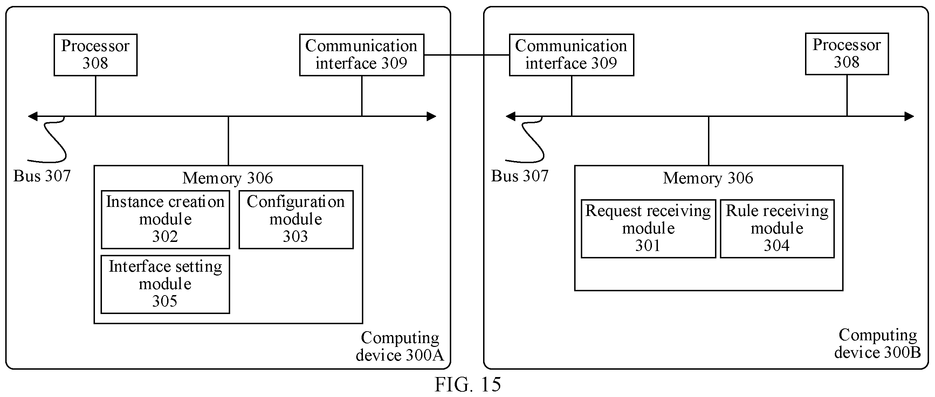

FIG. 15 is a diagram of another structure of a computing device cluster in a virtual instance creation method based on a cloud computing technology according to an embodiment of this application. As shown in FIG. 15, two computing devices 300A and 300B are connected to each other through a communication interface 309. A memory in the computing device 300A stores instructions used to perform functions of an instance creation module 302, a configuration module 303, and an interface setting module 305. A memory in the computing device 300B stores instructions used to perform functions of a request receiving module 301 and a rule receiving module 304. In other words, the memories 306 of the computing devices 300A and 300B jointly store the instructions used by the cloud management platform to perform the virtual instance creation method based on the cloud computing technology.

A connection manner between the computing device clusters shown in FIG. 15 may consider that, in the virtual instance creation method based on the cloud computing technology provided in this application, a large amount of computing needs to be performed on creating and configuring a virtual instance and a network interface, and computing needs to be performed based on simultaneous configuration of a plurality of tenants. Considering data transmission workload of the request receiving module 301 and the rule receiving module 304, to avoid an overload operation on the computing device 300A, the functions implemented by the request receiving module 301 and the rule receiving module 304 are performed by the computing device 300B.

It should be understood that a function of the computing device 300A shown in FIG. 15 may alternatively be completed by a plurality of computing devices 300. Similarly, a function of the computing device 300B may alternatively be completed by a plurality of computing devices 300.

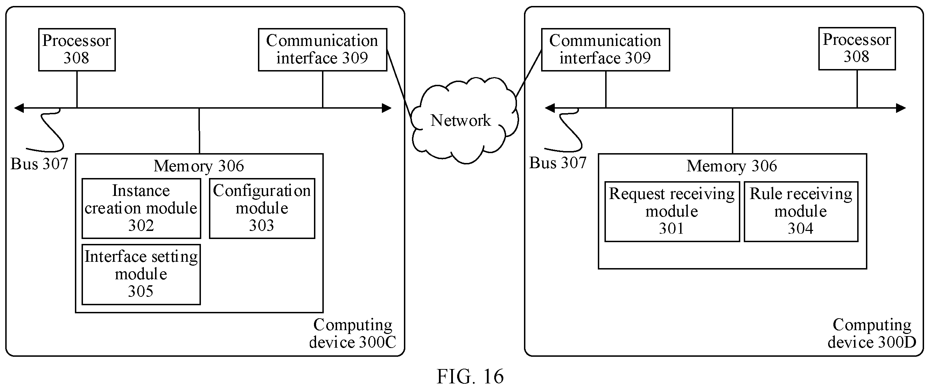

FIG. 16 is a diagram of another structure of a computing device cluster in a virtual instance creation method based on a cloud computing technology according to an embodiment of this application. In some possible implementations, one or more computing devices in the computing device cluster may be connected to each other through a network. The network may be a wide area network, a local area network, or the like. FIG. 16 shows a possible implementation. As shown in FIG. 16, two computing devices 300C and 300D are connected to each other through the network. Specifically, each computing device is connected to the network through a communication interface of the computing device. In this possible implementation, a memory 306 in the computing device 300C stores instructions for performing an instance creation module 302, a configuration module 303, and an interface setting module 305. In addition, a memory 306 in the computing device 300D stores instructions for performing functions of a request receiving module 301 and a rule receiving module 304.

A connection manner between the computing device clusters shown in FIG. 16 may consider that, in the virtual instance creation method based on the cloud computing technology provided in this application, a large amount of computing needs to be performed on creating and configuring a virtual instance and a network interface, and computing needs to be performed based on simultaneous configuration of a plurality of tenants. In addition, the network is needed for connection. These functions are performed independently. To achieve optimal storage and computing performance, it is considered that a large-traffic data transmission function implemented by the request receiving module 301 and the rule receiving module 304 is performed by the computing device 300D.

It should be understood that a function of the computing device 300C shown in FIG. 16 may alternatively be completed by a plurality of computing devices 300. Similarly, a function of the computing device 300D may alternatively be completed by a plurality of computing devices 300.

In some possible implementations, memories 306 in the one or more computing devices 300 in the computing device cluster may alternatively separately store some instructions used to perform the virtual instance creation method based on the cloud computing technology. In other words, a combination of the one or more computing devices 300 may jointly execute the instructions used to perform the virtual instance creation method based on the cloud computing technology.

An embodiment of this application further provides a computer program product including instructions. The computer program product may be a software or program product that includes the instructions and that can run on a computing device or be stored in any usable medium. When the computer program product runs on at least one computer device, the at least one computer device is enabled to perform the foregoing virtual instance creation method that is applied to the cloud management platform and that is based on the cloud computing technology.

Embodiments of this application further provide a computer-readable storage medium. The computer-readable storage medium may be any usable medium accessible by a computing device, or a data memory device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the foregoing virtual instance creation method that is applied to the cloud management platform and that is based on the cloud computing technology.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that the technical solutions described in the foregoing embodiments may still be modified or some technical features thereof may be equivalently replaced. However, these modifications or replacements do not make the essence of the corresponding technical solutions depart from the protection scope of the technical solutions in embodiments of the present invention.

It may be clearly understood by a person skilled in the art that, for a detailed working process of the foregoing system, apparatus, and unit, refer to a corresponding process in the foregoing method embodiments, and details are not described herein again.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A virtual instance creation method based on a cloud computing technology, wherein the method is applied to a cloud management platform, the cloud management platform is configured to manage an infrastructure, the infrastructure comprises a plurality of cloud data centers deployed in a distributed manner, a plurality of computing nodes are set in each cloud data center, and the method comprises:
receiving a first virtual instance creation request input by a first tenant, wherein the first virtual instance creation request comprises specification information of a to-be-created first virtual instance and information about a first cloud native application to which the to-be-created first virtual instance belongs;
selecting to create the first virtual instance on a first computing node that is in a first cloud data center and that can provide a specification matching the specification information, wherein the first virtual instance is configured to run the first cloud native application or one or more microservices in the first cloud native application, and the plurality of cloud data centers comprise the first cloud data center; and
configuring, based on the information about the first cloud native application, a first virtual instance manager of the first computing node to mark, with an identifier of the first cloud native application, a service packet sent by the first virtual instance.

2. The method according to claim 1, wherein the first virtual instance creation request further comprises first site information, and the method further comprises:
selecting, from the plurality of cloud data centers, the first cloud data center matching the first site information.

3. The method according to claim 1 or 2, wherein the method further comprises:
receiving a first security rule input by the first tenant, wherein the first security rule indicates permission to access the first cloud native application; and
configuring the first virtual instance manager of the first computing node to record the first security rule, wherein
the first virtual instance manager allows or forbids, according to the first security rule, sending, to the first virtual instance, a service packet to be sent to the first virtual instance by a virtual instance running another cloud native application or one or more microservices in the another cloud native application.

4. The method according to any one of claims 1 to 3, wherein a second virtual instance is deployed on a second computing node in the infrastructure, the second virtual instance is configured to run a second cloud native application or one or more microservices in the second cloud native application, the second computing node is set in one of the plurality of cloud data centers, and the method further comprises:
receiving a second security rule input by the first tenant, wherein the second security rule indicates permission of the first cloud native application to access the second cloud native application; and
configuring a second virtual instance manager of the second computing node to record an identifier of the first cloud native application and the second security rule, wherein
a destination address of the service packet sent by the first virtual instance is the second virtual instance, and when determining that the identifier of the first cloud native application with which the service packet sent by the first virtual instance is marked is consistent with the identifier recorded by the second virtual instance manager, the second virtual instance manager allows or forbids, according to the second security rule, sending the service packet sent by the first virtual instance to the second virtual instance.

5. The method according to claim 4, wherein before the security rule input by the first tenant for the first cloud native application is received, the method further comprises:
receiving a second virtual instance creation request input by the first tenant or a second tenant, wherein the second virtual instance creation request comprises specification information of the to-be-created second virtual instance and information about the second cloud native application to which the to-be-created second virtual instance belongs;
selecting to create the second virtual instance on the second computing node that is in a second cloud data center and that can provide a specification matching the specification information; and
configuring, based on the information about the second cloud native application, the second virtual instance manager of the second computing node to mark, with an identifier of the second cloud native application, a service packet sent by the second virtual instance.

6. The method according to claim 4 or 5, wherein the method further comprises:
setting a first network interface for the first cloud native application, and binding at least one virtual instance running the microservice in the first cloud native application to the first network interface, wherein the at least one virtual instance running the microservice in the first cloud native application comprises the first virtual instance, and the first network interface is set in the first cloud data center indicated by the first site information; and
setting a second network interface for the second cloud native application, and binding at least one virtual instance running the microservice in the second cloud native application to the second network interface, wherein the at least one virtual instance running the microservice in the second cloud native application comprises the second virtual instance, and the second network interface is set in the second cloud data center indicated by second site information, wherein
the first network interface and the second network interface are connected to each other through a cloud native network set in the infrastructure.

7. The method according to any one of claims 1 to 6, wherein the configuring, based on the information about the first cloud native application, a first virtual instance manager of the first computing node to mark, with an identifier of the first cloud native application, a service packet sent by the first virtual instance comprises:
configuring the first virtual instance manager to encapsulate the service packet into an inner packet of an overlay packet, and set the identifier of the first cloud native application in an outer packet of the overlay packet.

8. The method according to any one of claims 1 to 7, wherein the first virtual instance comprises a virtual machine or a container.

9. A cloud management platform, wherein the cloud management platform is configured to manage an infrastructure, the infrastructure comprises a plurality of cloud data centers deployed in a distributed manner, a plurality of computing nodes are set in each cloud data center, and the cloud management platform comprises:
a request receiving module, wherein the request receiving module is configured to receive a first virtual instance creation request input by a first tenant, wherein the first virtual instance creation request comprises specification information of a to-be-created first virtual instance and information about a first cloud native application to which the to-be-created first virtual instance belongs;
an instance creation module, wherein the instance creation module is configured to select to create the first virtual instance on a first computing node that is in a first cloud data center and that can provide a specification matching the specification information, wherein the first virtual instance is configured to run the first cloud native application or one or more microservices in the first cloud native application, and the plurality of cloud data centers comprise the first cloud data center; and
a configuration module, wherein the configuration module is configured to configure, based on the information about the first cloud native application, a first virtual instance manager of the first computing node to mark, with an identifier of the first cloud native application, a service packet sent by the first virtual instance.

10. The cloud management platform according to claim 9, wherein the first virtual instance creation request further comprises first site information; and
the instance creation module is further configured to select, from the plurality of cloud data centers, the first cloud data center matching the first site information.

11. The cloud management platform according to claim 9 or 10, wherein the cloud management platform further comprises a rule receiving module, wherein
the rule receiving module is configured to receive a first security rule input by the first tenant, wherein the first security rule indicates permission to access the first cloud native application; and
the configuration module is further configured to configure the first virtual instance manager of the first computing node to record the first security rule, wherein
the first virtual instance manager allows or forbids, according to the first security rule, to sending, to the first virtual instance, a service packet to be sent to the first virtual instance by a virtual instance running another cloud native application or one or more microservices in the another cloud native application.

12. The cloud management platform according to any one of claims 9 to 11, wherein a second virtual instance is deployed on a second computing node in the infrastructure, the second virtual instance is configured to run a second cloud native application or one or more microservices in the second cloud native application, and the second computing node is set in one of the plurality of cloud data centers;
the rule receiving module is further configured to receive a second security rule input by the first tenant, wherein the second security rule indicates permission of the first cloud native application to access the second cloud native application; and
the configuration module is further configured to configure a second virtual instance manager of the second computing node to record an identifier of the first cloud native application and the second security rule, wherein
a destination address of the service packet sent by the first virtual instance is the second virtual instance, and when determining that the identifier of the first cloud native application with which the service packet sent by the first virtual instance is marked is consistent with the identifier recorded by the second virtual instance manager, the second virtual instance manager allows or forbids, according to the second security rule, sending the first service packet to the second virtual instance.

13. The cloud management platform according to claim 12, wherein before receiving the security rule input by the first tenant for the first cloud native application,
the request receiving module is further configured to receive a second virtual instance creation request input by the first tenant or a second tenant, wherein the second virtual instance creation request comprises specification information of the to-be-created second virtual instance and information about the second cloud native application to which the to-be-created second virtual instance belongs;
the instance creation module is further configured to select to create the second virtual instance on the second computing node that is in a second cloud data center and that can provide a specification matching the specification information; and
the configuration module is further configured to configure, based on the information about the second cloud native application, the second virtual instance manager of the second computing node to mark, with an identifier of the second cloud native application, a service packet sent by the second virtual instance.

14. The cloud management platform according to claim 12 or 13, wherein the cloud management platform further comprises an interface setting module, wherein
the interface setting module is configured to set a first network interface for the first cloud native application, and bind at least one virtual instance running the microservice in the first cloud native application to the first network interface, wherein the at least one virtual instance running the microservice in the first cloud native application comprises the first virtual instance, and the first network interface is set in the first cloud data center indicated by the first site information; and
the interface setting module is further configured to set a second network interface for the second cloud native application, and bind at least one virtual instance running the microservice in the second cloud native application to the second network interface, wherein the at least one virtual instance running the microservice in the second cloud native application comprises the second virtual instance, and the second network interface is set in the second cloud data center indicated by second site information, wherein
the first network interface and the second network interface are connected to each other through a cloud native network set in the infrastructure.

15. The cloud management platform according to any one of claims 9 to 14, wherein the configuring, based on the information about the first cloud native application, a first virtual instance manager of the first computing node to mark, with an identifier of the first cloud native application, a service packet sent by the first virtual instance comprises:
the configuration module is specifically configured to configure the first virtual instance manager to encapsulate the service packet into an inner packet of an overlay packet, and set the identifier of the first cloud native application in an outer packet of the overlay packet.

16. The cloud management platform according to any one of claims 9 to 15, wherein the first virtual instance comprises a virtual machine or a container.

17. A cloud network system for a cloud native application, comprising:
a cloud native network, configured to connect a plurality of network interfaces, wherein each network interface is bound to one virtual instance;
a first virtual instance, configured to: be bound to a first network interface in the plurality of network interfaces, and run a first cloud native application or one or more microservices in the first cloud native application;
a second virtual instance, configured to: be bound to a second network interface in the plurality of network interfaces, and run a second cloud native application or one or more microservices in the second cloud native application; and
a cloud management platform, configured to receive a security rule input by a tenant, wherein the security rule indicates permission of the first cloud native application to access the second cloud native application, and the first network interface and/or the second network interface determine/determines, according to the security rule, whether to allow an access packet between the first virtual instance and the second virtual instance to pass.

18. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 8.

19. A computer program product comprising instructions, wherein when the instructions are run by a computing device cluster, the computer device cluster is enabled to perform the method according to any one of claims 1 to 8.

20. A computer-readable storage medium, comprising computer program instructions, wherein when the computer program instructions are executed by a computing device cluster, the computing device cluster performs the method according to any one of claims 1 to 8.
